# DEMANDE DE BREVET EUROPEEN

(11) **EP 1 048 345 A1**
(43) Date de publication de la demande: **02.11.2000**
(21) Numéro de dépôt: 00400860.3
(22) Date de dépôt: 29.03.2000
(51) Int. Cl.: B01J 20/18, B01J 20/28

(54) **Adsorbant à macroporosité élevée utilisable dans un procédé d'adsorption de gaz, notamment un procédé PSA**

(30) Priorité: 29.04.1999 FR 9905465
(71) Demandeur: L'air Liquide Société Anonyme pour l'étude et l'exploration des procédés Georges Claude, 75321 Paris Cédex 07 (FR)
(72) Inventeur: Thonnelier, Jean-Yves, 78960 Voisins le Bretonneux (FR); Lledos, Bernard, 78280 Guyancourt (FR); Labasque, Jacques, 78000 Versailles (FR); Crayssac, Frédéric, 92360 Meudon la Foret (FR)
(74) Mandataire: Le Moenner, Gabriel

(57) **Abrégé**

L'invention concerne un adsorbant macroporeux comportant des pores ayant un volume de pore (Vₘ) et un diamètre moyen de pore (Dₘ), tels que : Vₘ ≥ 1 cc.g⁻¹ et Dₘ ≥ 1 µm, Vₘ et Dₘ étant déterminés par porosimètrie au mercure ; leur procédé de fabrication par une technique de sphéronisation et de lyophilisation ; et leur utilisation pour séparer ou purifier des gaz, tel l'air, les gaz de synthèse ou les hydrocarbures, notamment les oléfines.

## Description

L'invention concerne un adsorbant macroporeux, un procédé de fabrication d'un tel adsorbant et son utilisation pour la mise en oeuvre de procédés de séparation ou de purification de gaz par adsorption, notamment de procédés PSA, TSA ou VSA.

Les procédés cycliques d'adsorption du type PSA (pour Pressure Swing Adsorption), TSA (Temperature Swing Adsorption) et VSA (Vacuum Swing Adsorption) sont actuellement largement utilisés pour la production des gaz. Ainsi, on peut citer, par exemple, la séparation des gaz de l'air par adsorption préférentielle de l'azote afin de produire l'oxygène par procédé PSA ou VSA.

Pour ce faire, les zéolites, notamment de type LTA ou FAU, essentiellement X ou LSX, sont les adsorbants le plus communément utilisés dans les procédés d'adsorption.

Classiquement, les adsorbants préférés pour la séparation des gaz, et plus particulièrement de l'air, sont des zéolites fortement échangées, en général à plus de 80%, avec des métaux alcalins ou alcalino-terreux, tels que le lithium, le calcium, le strontium, le baryum ou des métaux de transition, tels que l'aluminium, le cuivre ou le zinc, ou des mélanges de ces cations.

A ce titre on peut citer les documents US-A-5,268,023, US-A-5,174,979, US-A-4,859,217, US-A-5,152,813, US-A-4,481,018, US-A-5,419,891, EP-A-589406 et EP-A-598391.

De telles zéolites sont habituellement synthétisées sous la forme de poudre de cristaux de dimensions microniques. Toutefois, cette forme pulvérulente ne peut être directement utilisée dans des procédés cycliques de séparation des gaz ou dans des procédés catalytiques, car la poudre serait entraînée par les flux gazeux sous pression.

De ce fait, une étape de mise en forme, par exemple par extrusion ou formation de billes est requise. On choisit, pour ces granulats, la taille et la forme la plus adaptée au procédé dans lesquels ils doivent être mis en oeuvre.

Cette mise en forme confère à l'adsorbant notamment ses propriétés mécaniques, telle la résistance à l'écrasement, et cinétiques.

A ce jour, aucune loi de comportement générale n'a pu être dégagée, sachant qu'il est très difficile de relier les paramètres du procédé aux paramètres de l'adsorbant. Il est tout de même connu que les propriétés de l'adsorbant, et notamment celles liées à sa mise en forme, jouent un rôle primordial dans l'efficacité globale des procédés.

Les adsorbants ou granulats pour la séparation des gaz sont généralement constitués par un mélange de phase active zéolitique et de liant inorganique, telle une argile de type bentonite, attapulgite ou kaolin, assurant la cohésion mécanique des granulats.

Un exemple de fabrication, généralement utilisé, consiste à préparer un mélange intime de zéolithe et de liant pulvérulent, dans lequel sont ajoutés de l'eau, et, si nécessaire, des agents organiques, tels que, par exemples, des agents porogènes, des agents fluidifiants, des agents plastifiants ou tout agent modifiant la rhéologie du fluide, en particulier sa viscosité.

Le mélange est subséquemment mis en forme de bâtonnets ou de filés de formes diverses par passage au travers d'une filière ou d'une extrudeuse, ou mis en forme de billes à l'aide du dispositif adéquat.

Ensuite, les granulats ainsi formés sont cuits à des températures comprises entre 400 et 900°C, dans des fours à lits fixes ou mobiles, sous flux gazeux ou sous vide. Un choix judicieux de la température à tout moment de cette étape de cuisson doit permettre de conserver l'intégrité de la phase zéolitique active.

D'autres procédés de fabrication de granulats à partir de solutions contenant au moins un extrait sec existent.

On peut, par exemple citer le document DE-A-4118752 qui concerne un procédé de fabrication de granulats, notamment Al₂O₃, ZrO₂, et autres céramiques, à partir d'une solution mère. Dans ce procédé, on pulvérise et on congèle la solution mère dans un fluide cryogénique de manière à obtenir des granulats de l'ordre de 0.04 à 0.4 mm que l'on lyophilise ensuite.

On peut aussi citer à titre d'exemple les documents FR-A-2290246, US-A-3,862,302, FR-A-1464730, US-A-3,776,988, CH-A-544083, DE-A-4420936 et GB-A-2092880 qui reprennent ce type de procédé.

Or, la productivité des unités de séparation des gaz par procédés cycliques PSA, VSA ou TSA est un facteur primordial, directement relié au coût de production des gaz.

Une façon d'augmenter cette productivité consiste à diminuer le temps de cycle afin de produire plus de gaz pendant une période donnée.

Pour ce faire, il est indispensable d'utiliser un adsorbant possédant une cinétique d'adsorption suffisamment rapide, ainsi que décrit dans le document EP-A-785020.

Un moyen connu d'accélérer les cinétiques de transfert de masse au sein d'un adsorbant consiste à en diminuer le rayon hydraulique.

Toutefois, cette manière de procéder présente plusieurs inconvénients, notamment celui de conduire, si le flux gazeux est maintenu, à une diminution de la perméabilité, entraînant une augmentation des pertes de charge au sein des lits d'adsorbants.

Le problème qui se pose est donc de mettre au point un nouvel adsorbant présentant une cinétique d'adsorption plus élevée que celle des adsorbants connus mais n'engendrant pas ou peu d'augmentation des pertes de charges au sein des lits d'adsorbant contenant un tel adsorbant, de façon à améliorer la productivité des unités de séparation ou de purification de gaz, en particulier d'air.

En outre, un autre but de l'invention est aussi de proposer, d'une part, une méthode de préparation d'un tel adsorbant et, d'autre part, des procédés d'adsorption susceptibles de mettre en oeuvre un tel adsorbant.

Il s'ensuit alors que la présente invention concerne la préparation d'adsorbants à macro-porosité élevée, et leur utilisation pour la séparation des gaz par adsorption, et plus particulièrement des gaz de l'air.

Par macroporosité, on entend, conformément aux données de l'IUPAC, un pore de diamètre supérieur à 100 Å.

Plus précisément, la présente invention concerne un adsorbant macroporeux comportant des pores ayant un volume de pore (Vm) et un diamètre moyen de pore (Dm), tels que : Vₘ ≥ 1 cc.g⁻¹ et Dₘ ≥ 1 µm, Vm et Dm étant déterminés par porosimétrie au mercure.

En effet, il a été découvert que, de façon surprenante et non-prévisible, de tels adsorbants macroporeux présentent des cinétiques d'adsorption très rapides.

Dès lors, l'utilisation de ces adsorbants dans des procédés de séparation des gaz, et notamment des gaz de l'air, permet d'obtenir des cycles de production à durée très courte et, de ce fait, des productivités élevées.

Selon le cas, l'adsorbant macroporeux de l'invention peut comprendre l'une ou plusieurs des caractéristiques suivantes:
- Dₘ est compris entre 1 µm et 10 µm, de préférence Dₘ est compris entre 1 µm et 8 µm, préférentiellement encore Dₘ > 1,6 µm.
- Vₘ est compris entre 1 cc.g⁻¹ et 10 cc.g⁻¹, de préférence Vₘ est compris entre 1 cc.g⁻¹ et 5 cc.g⁻¹.
- Dₘ est préférentiellement compris entre 1.7 µm et 10 µm, de préférence Dₘ est compris entre 1.9 µm et 9 µm.
- Vₘ est préférentiellement compris entre 1.1 cc.g⁻¹ et 10 cc.g⁻¹, de préférence Vₘ est compris entre 1.2 cc.g⁻¹ et 10 cc.g⁻¹.
- il comporte une phase active adsorbante et, si nécessaire, au moins un liant inerte.
- la phase active adsorbante est de type zéolitique.
- le liant inerte est choisi parmi les argiles, les silices, les alumines, les silicates, les aluminosilicates et les autres liants.
- le rapport de la proportion en poids de phase active adsorbante à la proportion en poids de liant inerte est de 50 : 50 à 95 : 5, de préférence de 70 : 30 à 90 : 10.
- la phase active adsorbante contient un ou plusieurs cations métalliques, de préférence des cations alcalins, alcalino-terreux ou de métaux de transition.
- la phase zéolite adsorbante est échangée à au moins 80% par un ou plusieurs cations métalliques, de préférence à au moins 90%.
- le cation métallique est choisi parmi le lithium, le calcium, le zinc, le fer, ou tout autre cation des groupes 1, 2, 7, 10, 11, 12 et f du tableau périodique des éléments tel qu'adopté par IUPAC, de préférence le cation est le lithium.

Par ailleurs, l'invention concerne également un procédé de fabrication d'un adsorbant macroporeux selon l'invention, dans lequel l'adsorbant est fabriqué par un procédé de sphéronisation comprenant les étapes de:
(a) une préparation d'une solution-mère par mélange d'au moins un extrait sec avec au moins un diluant, ledit extrait sec contenant au moins un matériau adsorbant,
(b) fractionnement d'au moins une partie de ladite solution-mère en particules,
(c) congélation par mise en contact d'au moins une partie des particules fractionnées à l'étape (b) avec au moins un fluide cryogénique à une température inférieure à -100°C,
(d) élimination d'au moins une partie du diluant contenu dans les particules congelées issues de l'étape (c), et
(e) cuisson à une température comprise entre 300°C et 900°C d'au moins une partie des particules issues de l'étape (d).

Selon le cas, le procédé de fabrication peut comporter l'une ou plusieurs des caractéristiques suivantes:
- l'extrait sec contient au moins un adsorbant de type zéolitique et au moins un liant.
- le diluant est de l'eau.
- à l'étape (b), le fractionnement est obtenu par passage de la solution-mère dans un ou plusieurs orifices de taille contrôlée, de préférence afin d'obtenir des cylindres calibrés ou des billes.
- à l'étape (c), le fluide cryogénique est de l'azote liquide.
- à l'étape (d), l'élimination du diluant est réalisée par lyophilisation.
- à l'étape (e), la cuisson est réalisée à une température comprise entre 550°C et 750°C.
- préalablement à l'étape (b), on ajoute à la solution-mère un agent fluidisant ou plastifiant, de manière à modifier la rhéologie, en particulier la viscosité, de ladite solution-mère et à faciliter son fractionnement durant l'étape (b).

Les adsorbants macroporeux selon l'invention sont particulièrement bien adaptés à une utilisation en vue d'adsorber au moins un composé gazeux contenu dans un mélange gazeux.

De plus, l'invention concerne aussi un procédé de séparation ou de purification d'un mélange gazeux mettant en oeuvre au moins une étape d'adsorption d'au moins un composé présent dans ledit mélange gazeux, l'adsorption dudit au moins un composé étant réalisée au moyen d'un adsorbant selon l'invention.

Selon le cas, le procédé de séparation ou de purification selon l'invention peut comprendre l'une ou plusieurs des caractéristiques suivantes:
- le mélange gazeux à purifier ou à séparer est choisi parmi:
- l'air,
- les mélanges contenant de l'oxygène et de l'azote,
- les mélanges contenant du monoxyde de carbone et de l'hydrogène,
- les hydrocarbures, notamment les oléfines,
- il est de type PSA ou TSA, de préférence VSA, et en ce que le mélange gazeux est de l'air et le composé gazeux à séparer est de l'oxygène.

L'invention va maintenant être mieux comprise grâce aux exemples ci-après, donnés à titre illustratif mais non limitatif.

### Exemple 1: Préparation de l'échantillon n° 1.

Une zéolithe 13X (181.2g) et un liant argileux de type attapulgite (45.4g) sont mélangés en phase solide.

Le mélange obtenu est ensuite versé dans 533.5 g d'eau, vigoureusement agité et maintenu à une température de l'ordre de 3 à 8°C.

En d'autres termes, on prépare tout d'abord un mélange d'au moins un extrait sec, c'est-à-dire une substance solide, dans notre cas une zéolite 13X et un liant inorganique, du type argile minérale par exemple, et un diluant, de l'eau par exemple.

A ce mélange peuvent éventuellement être ajoutée des molécules organiques, par exemple des agents fluidifiants permettant d'ajuster la viscosité du fluide.

Ensuite, le mélange ainsi refroidi est fractionné par passage au travers d'une aiguille creuse de diamètre interne de 0.7 mm et de longueur 12 mm afin de former des gouttes.

C'est-à-dire que, dit de manière plus générale, le mélange est fractionné, par passage au travers d'orifices calibrés ou non, qui peuvent, si nécessaire, être montés sur un pot vibrant afin de former des granulats de forme plus ou moins sphériques. La dimension et la fréquence des vibrations, judicieusement choisies, permettent d'ajuster le diamètre des granulats obtenus. Tout autre type de fractionnement de fluide plus ou moins visqueux peut aussi être utilisé.

Les granulats ainsi formés sont mis en contact avec un fluide cryogénique dont le point d'ébullition est inférieur à -30°C, par exemple de l'azote liquide, ce qui provoque une congélation instantanée des granulats qui sont ensuite récupérés.

En effet, les granulats ou gouttes qui tombent sur un film d'azote liquide sont instantanément congelées.

Les billes ainsi formées sont récupérées sur un tamis puis lyophilisées à laide d'un appareil de lyophilisation, par exemple du type Usifroid MH15.

En effet, il est souhaitable que le diluant contenu dans les granulats soit éliminé par une technique desdits granulats. A cette fin, la technique de lyophilisation est tout à fait appropriée.

Après lyophilisation, les granulats ainsi « séchés » sont ensuite cuits à des températures comprises entre 300 et 900°C afin d'assurer la cohésion de l'adsorbant. La structure de la phase zéolitique active est préservée par le choix adapté de rampes et de paliers de température.

Dans cet exemple 1, après lyophilisation, les billes sont placées dans un réacteur en quartz balayé par un courant d'azote. La température de l'ensemble est portée à 700°C à raison de 2°C/min, et maintenue à cette température durant 2 heures.

Les billes d'adsorbant macroporeux ainsi produites sont récupérées et constituent l'échantillon n° 1 analysé ci-après (voir exemple 5).

### Exemple 2: Préparation de l'échantillon n° 2.

Un mélange contenant 96g de zéolite 13X, 17g de liant attapulgite et 150g d'eau est préparé selon les conditions décrites dans l'exemple 1.

Le mélange passe ensuite au travers d'une aiguille de diamètre interne 2 mm, et tombe dans un film d'azote liquide. Les billes ainsi obtenues subissent le même traitement que celui décrit plus haut pour l'exemple 1.

Les billes d'adsorbant macroporeux ainsi produites sont récupérées et constituent l'échantillon n° 2 analysé ci-après (voir exemple 5).

### Exemple 3: Préparation de l'échantillon n° 3.

Un mélange contenant 80g de zéolite 13X, 20g de liant attapulgite et 150g d'eau est préparé selon les conditions décrites dans l'exemple 1.

Ce mélange est ensuite traité selon les conditions décrites dans l'exemple 2.

Les billes d'adsorbant macroporeux ainsi produites sont récupérées et constituent l'échantillon n° 3 analysé ci-après (voir exemple 5).

### Exemple 4: Préparation des échantillons n° 4 et 5.

A des fins de comparaison, des billes d'adsorbant sont préparées selon une méthode classique bien connue de l'homme de l'art, à partir d'un mélange contenant environ 84% de zéolite 13X et 16% de liant.

Ces billes sont cuites sous flux d'air à environ 600-700°C.

Ces billes sont ensuite tamisées.

La fraction 1.0 à 1.5 mm correspond à l'échantillon 4 et la fraction 1.5 à 2.0 mm correspond à l'échantillon 5.

### Exemple 5: Analyse des résultats.

Les échantillons 1 à 5 obtenus ci-avant sont caractérisés par porosimétrie au Mercure. Les diamètres moyens et les cinétiques d'adsorption sont mesurés respectivement par les tests OPSD et BTC décrits ci-après.

Le test OPSD (pour Optical Partical Size Distribution) permet la détermination de la répartition granulométrique de granulats (essentiellement de billes) d'adsorbant par une mesure basée sur l'analyse d'image, telle que décrite par la norme NF X11-696. L'adsorbant à analyser est éclairé par transmission et une image est acquise par l'intermédiaire d'une caméra vidéo. Cette image est numérisée et analysée à l'aide d'un logiciel spécifique (Microvision™). Le logiciel a été préalablement étalonné à l'aide de billes d'acier parfaitement calibrées. Le diamètre moyen, exprimé en mm, est ainsi déterminé avec une précision de ± 3.5%.

Le test BTC met en oeuvre un appareil destiné à mesurer un temps caractéristique de convection-diffusion de l'azote dans un adsorbant mis en forme (bille, extrudé...).

L'échantillon adsorbant est placé dans une cellule thermostatée à 20°C, dans laquelle on fait le vide, puis il est mis en contact avec une quantité fixée d'azote (en mol), elle-même à 20°C.

L'évolution de la pression dans la cellule P = f(t) est enregistrée jusqu'à l'obtention de l'équilibre mécanique (quelques secondes) et thermique (quelques minutes).

Le signal de pression est ensuite interprété à l'aide d'un modèle similaire à celui décrit dans *Principles of adsorption and adsorption processes,* D. M. RUTHVEN, John Wiley & Sons, 1984, p 170.

On obtient le paramètre cinétique D_{eff}/R² par ajustement de la courbe théorique correspondant à ce modèle sur la courbe mesurée.

Les résultats obtenus sont consignés dans le tableau suivant.

**TABLEAU**

| ECHANTILLON N° | MACROPOROSITE (HG) | | CINETIQUE D_{eff}/R² (1/s) | DIAMETRE (mm) | CINETIQUE INTRINSEQUE (mm².s⁻¹) |
|---|---|---|---|---|---|
| | vₘ (cc/g) | Dₘ(µm) | | | |
| 1 | 1.64 | 3.61 | 5.3 | 1.48 | 12 |
| 2 | 1.39 | 2.10 | 1.89 | 2.50 | 11.8 |
| 3 | 1.47 | 2.10 | 1.26 | 2.54 | 8.2 |
| 4 | 0.29 | 0.31 | 0.83 | 1.42 | 1.7 |
| 5 | 0.28 | 0.23 | 0.50 | 1.81 | 1.7 |

Il est à préciser que le paramètre « cinétique intrinsèque (mm².s⁻¹) » est obtenu par multiplication du coefficient cinétique D_{eff}/R² (1/s) par le carré du diamètre (mm).
En outre :
- D_{eff}/R² : ; coefficient cinétique (en 1/s )
- D_{eff} : coefficient de diffusion-convection efficace (en m²/s)
- R : rayon caractéristique de la particule (en m)

On constate, au vu du tableau, que les adsorbants présentant les volumes macroporeux et les diamètres moyens des macropores élevés (échantillons 1 à 3 conformes à l'invention) présentent des cinétiques d'adsorption beaucoup plus élevés que les adsorbants « classiques » à faible macro-porosité (échantillons 4 à 5 selon l'art antérieur).

## Revendications

1. Adsorbant macroporeux comportant des pores ayant un volume de pore (Vm) et un diamètre moyen de pore (Dm), tels que : Vₘ ≥ 1 cc.g⁻¹ et Dₘ ≥. 1 µm, Vm et Dm étant déterminés par porosimètrie au mercure.

2. Adsorbant selon la revendication 1, caractérisé en ce que Dₘ est compris entre 1 µm et 10 µm, de préférence Dₘ est compris entre 1 µm et 8 µm, préférentiellement encore Dₘ > 1,6 µm.

3. Adsorbant selon l'une des revendications 1 ou 2, caractérisé en ce que Vₘ est compris entre 1 cc.g⁻¹ et 10 cc.g⁻¹, de préférence Vₘ est compris entre 1 cc.g⁻¹ et 5 cc.g⁻¹.

4. Adsorbant selon l'une des revendications 1 à 3, caractérisé en ce qu'il comporte une phase active adsorbante et, si nécessaire, au moins un liant inerte.

5. Adsorbant selon l'une des revendications 1 à 4, caractérisé en ce que la phase active adsorbante est de type zéolitique et/ou en ce que le liant inerte est choisi parmi les argiles, les silices, les alumines, les silicates et les aluminosilicates.

6. Adsorbant selon l'une des revendications 1 à 5, caractérisé en ce que le rapport de la proportion en poids de phase active adsorbante à la proportion en poids de liant inerte est de 50 : 50 à 95 : 5, de préférence de 70 : 30 à 90 : 10.

7. Adsorbant selon l'une des revendications 1 à 6, caractérisé en ce que la phase active adsorbante contient un ou plusieurs cations métalliques, de préférence des cations alcalins, alcalino-terreux ou de métaux de transition.

8. Adsorbant selon l'une des revendications 1 à 7, caractérisé en ce que la phase zéolite adsorbante est échangée à au moins 80% par un ou plusieurs cations métalliques, de préférence à au moins 90%.

9. Adsorbant selon l'une des revendications 1 à 8, caractérisé en ce que le cation métallique est choisi parmi le lithium, le calcium, le zinc et le fer, de préférence le cation est le lithium.

10. Procédé de fabrication d'un adsorbant selon l'une des revendications 1 à 9, dans lequel ledit adsorbant est fabriqué par un procédé de sphéronisation comprenant les étapes de:
(a) une préparation d'une solution-mère par mélange d'au moins un extrait sec avec au moins un diluant, ledit extrait sec contenant au moins un matériau adsorbant,
(b) fractionnement d'au moins une partie de ladite solution-mère en particules,
(c) congélation par mise en contact d'au moins une partie des particules fractionnées à l'étape (b) avec au moins un fluide cryogénique à une température inférieure à -100°C,
(d) élimination d'au moins une partie du diluant contenu dans les particules congelées issues de l'étape (c), et
(e) cuisson à une température comprise entre 300°C et 900°C d'au moins une partie des particules issues de l'étape (d).

11. Procédé selon la revendication 10, caractérisé en ce que l'extrait sec contient au moins un adsorbant de type zéolitique et au moins un liant et/ou en ce que le diluant est de l'eau.

12. Procédé selon l'une des revendications 10 ou 11, caractérisé en ce que à l'étape (b), le fractionnement est obtenu par passage de la solution-mère dans un ou plusieurs orifices de taille contrôlée, de préférence des cylindres calibrés.

13. Procédé selon l'une des revendications 10 à 12, caractérisé en ce que à l'étape (c), le fluide cryogénique est de l'azote liquide.

14. Procédé selon l'une des revendications 10 à 13, caractérisé en ce que à l'étape (d), l'élimination du diluant est réalisée par lyophilisation et/ou en ce que, à l'étape (e), la cuisson est réalisée à une température comprise entre 550°C et 750°C.

15. Procédé selon l'une des revendications 10 à 14, caractérisé en ce que, préalablement à l'étape (b), on ajoute à la solution-mère un agent fluidisant de manière à modifier la viscosité de ladite solution-mère et à faciliter son fractionnement durant l'étape (b).

16. Utilisation d'un adsorbant selon l'une des revendications 1 à 9, pour adsorber au moins un composé gazeux contenu dans un mélange gazeux.

17. Procédé de séparation ou de purification d'un mélange gazeux mettant en oeuvre au moins une étape d'adsorption d'au moins un composé présent dans ledit mélange gazeux, l'adsorption dudit au moins un composé étant réalisée au moyen d'un adsorbant selon l'une des revendications 1 à 9.

18. Procédé de séparation ou de purification selon la revendication 17, dans lequel le mélange gazeux à purifier ou à séparer est choisi parmi:
- l'air,
- les mélanges contenant de l'oxygène et de l'azote,
- les mélanges contenant du monoxyde de carbone et de l'hydrogène,
- les hydrocarbures, notamment les oléfines.

19. Procédé de séparation ou de purification selon l'une des revendications 17 ou 18, caractérisé en ce qu'il est de type PSA ou TSA, de préférence VSA, et en ce que le mélange gazeux est de l'air et le composé gazeux à séparer est de l'oxygène.
